# EUROPÄISCHE PATENTANMELDUNG

(11) **EP 3 486 064 A1**
(43) Veröffentlichungstag der Anmeldung: **22.05.2019**
(21) Anmeldenummer: 18192984.5
(22) Anmeldetag: 06.09.2018
(51) Int. Cl.: B29C 45/18, B29C 45/33, B29C 45/00, B29C 45/56, B29C 45/16

(54) **SPRITZGUSSVORRICHTUNG UND -VERFAHREN**

(30) Priorität: 17.11.2017 DE 102017127186
(71) Anmelder: Kunststoff-Fröhlich GmbH, 37431 Bad Lauterberg im Harz (DE)
(72) Erfinder: FRÖHLICH, Michael, 37431 Bad Lauterberg (DE)
(74) Vertreter: Meissner Bolte Partnerschaft mbB

(57) **Zusammenfassung**

Die Erfindung betrifft ein Spritzgussverfahren zur Herstellung eines faserverstärkten Spritzgussteils, insbesondere Kfz-Spritzgussteils, wobei während eines ersten Zeitraums ein erster Werkstoff in eine Spritzgussform (12) eingefüllt wird und während eines zweiten Zeitraums ein zweiter Werkstoff in die Spritzgussform (12) eingefüllt wird, wobei sich erster und zweiter Werkstoff zumindest hinsichtlich einer jeweiligen Faserkomponente unterschieden, wobei eine Faserverteilungseinrichtung (16) während des ersten Zeitraums in einer ersten Stellung ist und während des zweiten Zeitraums in einer abweichenden, zweiten, Stellung ist, derart, dass der erste Werkstoff während des ersten Zeitraums und der zweite Werkstoff während des zweiten Zeitraums innerhalb der Spritzgussform (12) unterschiedlich verteilt werden.

## Beschreibung

Die Erfindung betrifft ein Spritzgussverfahren zur Herstellung eines faserverstärkten Spritzgussteils, insbesondere Kfz-Spritzgussteils, nach Anspruch 1 sowie eine entsprechende Spritzgussvorrichtung.

Faserverstärkte Spritzgussteile sind im Stand der Technik, u.a. auch im Kfz-Bereich grundsätzlich bekannt. Gerade in diesem Bereich müssen Spritzgussteile hohe Anforderungen an Sicherheit und Stabilität erfüllen. Dies ist mit bekannten Verfahren derzeit nur einschränkend oder mit hohem Aufwand möglich.

Es ist daher Aufgabe der Erfindung, ein Spritzgussverfahren zur Herstellung eines faserverstärkten Spritzgussteils, insbesondere eines Kfz-Spritzgussteils, vorzuschlagen, das eine möglichst einfache Herstellung von möglichst stabilen und sicheren Spritzgussteilen mit Faserverstärkung ermöglicht. Weiterhin ist es Aufgabe der Erfindung, eine entsprechende Spritzgussvorrichtung vorzuschlagen.

Die Aufgabe wird insbesondere durch ein Spritzgussverfahren zur (bzw. der) Herstellung eines faserverstärkten Spritzgussteils, insbesondere Kfz-Spritzgussteils, gelöst, wobei ein Einfüll-Stoff mit einer Faserkomponente in eine Spritzgussform (12) eingefüllt wird, wobei eine Faserverteilungseinrichtung (16) während eines ersten Zeitraums des Einfüllvorgangs in einer ersten Stellung ist und während eines zweiten Zeitraums in einer abweichenden, zweiten, Stellung ist, insbesondere derart, dass die Faserkomponente des Einfüll-Stoff während des ersten Zeitraums und während des zweiten Zeitraums unterschiedlich innerhalb der Spritzgussform (12) verteilt werden. Vorzugsweise wird ein solcher Einfüll-Stoff in eine Spritzgussform eingefüllt, der zunächst aus einer Grundkomponente (die ggf. bereits eine erste Faserkomponente, z. B. Kurzfaserkomponente enthält) besteht und vor dem (unmittelbaren) Einspritzen durch eine (insbesondere variable) Beimengung von Verstärkungsstoffen (insbesondere eine Langfaserkomponente, mit im Vergleich zur Kurzfaserkomponente, längeren Fasern) an die mechanischen Anforderungen des fertigen Bauteils angepasst wird. Während des Einspritzvorganges ist eine Faserverteilungseinrichtung innerhalb des Spritzgießwerkzeuges vorzugsweise zunächst in einer ersten Stellung und nach einem (definierten) Zeitabstand in einer abweichenden, zweiten, Stellung, derart, dass die Faserverteilung der beigemengten Füllstoffe innerhalb der Spritzgussform unterschiedlich (in Abhängigkeit von dem Beanspruchungsverhalten bzw. den benötigten mechanischen Eigenschaften des fertigen Bauteils) erfolgen kann. Beispielsweise kann die Faserkonzentration im Bereich einer zu erwartenden Bruchstelle (lokal) erhöht werden. Das fertige Produkt umfasst dann also vorzugsweise mindestens einen ersten Werkstoff und einen zweiten Werkstoff, die sich hinsichtlich ihrer jeweiligen Faserkomponente (insbesondere deren Konzentration und/oder Orientierung und/oder Fasergeometrie, wie insbesondere Faserlänge und/oder Faserdicke) unterscheiden.

Ein Kerngedanke der Erfindung liegt darin, eine Verteilung einer Faserkomponente während des Herstellens des Spritzgussteils (bzw. beim Einfüllen des jeweiligen Einfüll-Stoffes) zu verändern, wobei dazu eine entsprechende Faserverteilungseinrichtung verstellt wird. Dadurch kann auf einfache Art und Weise erreicht werden, dass die Faserkomponente des eingesetzten Einfüll-Stoffes bzw. die verschiedenen Komponenten des bzw. der eingesetzten Einfüll-Stoffe(s) (z. B. eine Trägermatrixkomponente mit Kurzglasfasergehalt und einer zugesetzten Faserkomponente) besonders günstig, insbesondere im Hinblick auf Stabilitäts- und/oder Gewichtsaspekte, verteilt werden. Vorzugsweise kann die Faserverteilungsvorrichtung dazu in Abhängigkeit vom Füllgrad der Spritzgussform aus einem Einfüll-Stofffluss (Schmelzefluss) entfernt bzw. herausbewegt werden. Der Einfüll-Stoff (insbesondere umfassend eine Trägermatrixkomponente und eine Faserkomponente, insbesondere Glasfaserkomponente) kann vorzugsweise hinsichtlich seiner jeweiligen Faserkomponente, also beispielsweise einer Länge der Fasern und/oder eines relativen Anteils der Fasern (z. B. in Gewichtsprozent) an dem gesamten Einfüll-Stoff variiert werden (insbesondere vor dem Einfüllen, ggf. während des Einfüllens). Es können ein erster und ein zweiter Einfüll-Stoff zum Einsatz konmmen, wobei sich der erste und der zweite Einfüll-Stoff zumindest hinsichtlich einer jeweiligen Faserkomponente unterscheiden. Jeweilige Füllstoffe und/oder jeweilige Zusatzkomponenten verschiedener Einfüll-Stoffe können gleich oder verschieden ausgebildet sein (insbesondere kann eine jeweilige Matrixkomponente, in der die Fasern eingebettet sind, gleich oder verschieden sein).

Unter Einfüll-Stoff ist insbesondere derjenige Stoff zu verstehen, der in die Form eintritt (in die Form eingespritzt wird). Unter Werkstoff ist insbesondere ein Stoff des fertigen Produktes zu verstehen. Wenn Stoffe als verschieden bezeichnet werden, ist darunter insbesondere zu verstehen, dass sie sich durch die stoffliche Beschaffenheit von verwendeten Stoffkomponenten unterschieden und/oder durch den Anteil von ggf. (hinsichtlich der stofflichen Beschaffenheit) gleichen Komponenten.

Im obigen Sinne kann auch noch ein dritter, vierter oder noch weiterer Einfüll-Stoff bzw., im fertigen Produkt, Werkstoff zum Einsatz kommen. Es ist auch denkbar, dass ein Kontinuum verschiedener Einfüll-Stoffe zum Einsatz kommt, das beispielsweise dadurch erzeugt wird, dass eine Zumischung einer Faserkomponente kontinuierlich geändert wird. Erster und zweiter (und ggf. weitere) Einfüll-Stoffe können auch diskret erzeugt werden, insbesondere in dem Sinne, dass eine Veränderung hinsichtlich der Faserkomponente in diskreten Schritten erfolgt (beispielsweise eine schrittweise Erhöhung oder Erniedrigung der Faserlänge oder eine stückweise Erhöhung oder Erniedrigung des Faseranteils).

Die Verteileinrichtung kann während eines dritten, vierten und/oder noch weiteren Zeitraums in einer dritten, vierten bzw. noch weiteren Stellung sein. Es ist auch denkbar, dass die Verteileinrichtung kontinuierlich oder in diskreten Schritten verstellt (insbesondere herausbewegt) wird, derart, dass die Faserverteilung kontinuierlich bzw. in diskreten Schritten verändert wird.

Unter einer unterschiedlichen Verteilung ist insbesondere zu verstehen, dass die (jeweilige) Faserkomponente während des ersten Zeitraums durch Wirken der Faserverteilungseinrichtung zumindest überwiegend in Richtung einer ersten Seite (z. B. Innenseite bei einem Hohlkörper) und/oder weiter nach innen geleitet/gelenkt wird und dort dann (zumindest überwiegend) erstarrt und während des zweiten (bzw. weiteren) Zeitraums (relativ gesehen) mehr in Richtung einer zweiten Seite (z. B. Außenseite) und/oder weiter nach außen geleitet/gelenkt wird und dort erstarrt. Insbesondere aufgrund der vorhandenen Viskosität des jeweiligen Einfüll-Stoffes wird dabei ein unterschiedliches Einleiten in die Spritzgussform auch (zumindest teilweise) im fertigen Produkt abgebildet. Unter einer unterschiedlichen Verteilung kann insbesondere auch verstanden werden, dass zunächst während eines ersten Zeitraums eine hohe Homogenität des aus der Trägermatrixkomponente und der beigemengten Verstärkungsfaser erzeugten Materialgemisches angestrebt wird. Diese Homogenität kann vorzugsweise nach einem Eintreten in die Kavität des Spritzgießwerkzeuges (zumindest während eines bestimmten Zeitraumes) dahingehend beeinflusst werden, dass durch die Faserverteilungseinrichtung neben der Beeinflussung einer Fließfront des Materials eine definierte Entmischung und eine damit verbundene Anreicherung bestimmter Bereiche innerhalb des Formteiles mit Verstärkungsfasern erfolgen kann.

Erster bzw. zweiter Zeitraum können vergleichsweise kurz sein. Ein erster und/oder zweiter (oder ggf. ein dritter, vierter und/oder weiterer Zeitraum) kann jedoch auch mindestens 0,5 Sekunden, vorzugsweise mindestens eine Sekunde andauern. Insbesondere bei einer kontinuierlichen der Faserverteileinrichtung kann der erste Zeitraum auch als erster Zeitpunkt und der zweite Zeitraum als zweiter Zeitpunkt (z. B. innerhalb eines Kontinuums von Zeiträumen) angesehen werden.

### Erster und zweiter Zeitraum können unterschiedlich lang sein

Vorzugsweise taucht die Faserverteilungseinrichtung während des ersten Zeitraums weiter in die Spritzgussform ein als während des zweiten Zeitraums (oder umgekehrt). Durch ein entsprechendes Hinausbewegen (oder ggf. Hineinbewegen) kann auf einfache Art und Weise erreicht werden, dass einerseits (zunächst) ein, insbesondere (vergleichsweise) homogenisierter, Einfüll-Stoff mehr in eine erste Richtung, z. B. einen inneren Bereich, gedrängt wird und darauffolgend (wenn ein bestimmter Bereich bereits durch den Einfüll-Stoff zumindest teilweise ausgefüllt ist) eine Richtungsbeeinflussung und/oder Enthomogenisierung des Einfüll-Stoffes erfolgt und dieser mehr in eine zweite Richtung, z.B. in Richtung eines äußeren Bereichs, gelenkt wird. Alternativ oder zusätzlich kann die Faserverteilungseinrichtung während des ersten Zeitraums anders orientiert sein als während des zweiten Zeitraums (beispielsweise aufgrund einer Rotation oder Verschwenkung oder dergleichen).

Die Faserverteilungseinrichtung umfasst vorzugsweise einen Faserverteilungsschieber. Dadurch kann auf besonders einfache Art und Weise eine entsprechend gewünschte Verteilung der Fasern innerhalb des herzustellenden Spritzgussteils erreicht werden. Der Faserverteilungsschieber verläuft vorzugsweise (zumindest abschnittsweise) innerhalb eines Formschiebers. Mindestens ein derartiger Formschieber kann ganz allgemein (ggf. auch bei alternativen Ausführungsformen, die keinen Faserverteilungsschieber als Bestandteil der Faserverteilungseinrichtung aufweisen) vorgesehen sein. Unter einem Formschieber ist insbesondere eine Einrichtung zu verstehen, die in seitlicher Richtung (nach dem Herstellen des Spritzgussteils) entfernt werden kann, so dass insbesondere auch hinterschnittige Spritzgussteile hergestellt werden können. Es können mehrere Formschieber vorgesehen sein. Es können auch mehrere Faserverteilungsschieber vorgesehen sein.

Der (oder die) Formschieber definiert (definieren) vorzugsweise mindestens 60 Gew.-% einer Außenfläche in einem seitlichen Bereich. Der Faserverteilungsschieber bzw. die Faserverteilungseinrichtung definieren vorzugsweise nicht mehr als 10 Gew.-% einer Außenfläche (in einem seitlichen Bereich, also insbesondere in einem Bereich zwischen den beiden Stirnenden, bzw. zwischen einem Düsenende und einem Auswerferende, des Spritzgussteils). Wenn verschiedene Einfüll-Stoffe einfüllbar sind unterscheiden sich ein erster und zweiter Einfüll-Stoff vorzugsweise hinsichtlich einer Faserstruktur, insbesondere Faserlänge und/oder Faserdicke, und/oder hinsichtlich eines (gewichtsmäßigen) Faseranteils. Eine Faserlänge des zweiten Einfüll-Stoffes kann beispielsweise 1,5-mal oder 2-mal so groß sein wie eine Faserlänge des ersten Einfüll-Stoffes (oder umgekehrt). Ein Faseranteil (in Gewichtsprozent), bezogen auf das Gesamtgewicht des jeweiligen Einfüll-Stoffes, kann beim zweiten Einfüll-Stoff vorzugsweise 1,5-mal, insbesondere 2-mal so groß sein wie beim ersten Einfüll-Stoff, oder umgekehrt.

Eine Steuerung der Faserverteilungseinrichtung kann zeit- und/oder druckabhängig erfolgen. Beispielsweise kann nach Ablauf eines ersten Zeitraums eine erste Steuerung dahingehend erfolgen, dass die Faserverteilungseinrichtung aus einem zu füllenden Volumen der Spritzgussform teilweise oder vollständig herausbewegt wird. Alternativ oder zusätzlich kann eine derartige Steuerung auch dadurch erfolgen, dass ein Druck innerhalb des zu füllenden Volumen (zumindest mittelbar, ggf. unmittelbar) bestimmt bzw. gemessen wird und eine Verstellung der Faserverteilungseinrichtung abhängig von diesem Druck erfolgt, z. B. bei Überschreiten eines Druck-Schwellenwertes.

Eine Steuerung einer Einfüll-Stoffzusammensetzung kann zeit- und/oder druckabhängig erfolgen, insbesondere wie im Zusammenhang mit der Steuerung der Faserverteilungseinrichtung beschrieben. Beispielsweise kann nach Ablauf eines ersten Zeitraums eine erste Steuerung dahingehend erfolgen, dass sich die beigemischte Faserkomponente (insbesondere hinsichtlich ihrer Struktur und/oder ihres Anteils) von der vorherigen Faserkomponente unterscheidet. Alternativ oder zusätzlich kann eine derartige Änderung hinsichtlich der Faserkomponente druckabhängig erfolgen. Eine Steuerung der Einfüll-Stoffzusammensetzung und der Faserverteilungseinrichtung erfolgt vorzugsweise synchron.

Vorzugsweise enthält der Einfüll-Stoff, insbesondere der erste und/oder zweite Einfüll-Stoff, Glas- und/oder Kohlenstofffasern. Alternativ oder zusätzlich können auch Kunststofffasern und/oder Naturfasern zum Einsatz kommen.

Insoweit die Faserlänge schwankt, soll bei einem Vergleich verschiedener Einfüll-Stoffe insbesondere jeweils ein arithmetischer Mittelwert der Faserlänge und/oder Faserdicke herangezogen werden.

Ein Faseranteil des Einfüll-Stoffes, insbesondere des ersten und/oder zweiten Einfüll-Stoffes, kann mindestens 10 Gew.-%, vorzugsweise mindestens 15 Gew.-% aufweisen.

Ein Faseranteil des Einfüll-Stoffes, insbesondere des ersten und/oder zweiten Einfüll-Stoffes kann höchstens 80 Gew.-%, vorzugsweise höchstens 65 Gew.-% betragen.

Eine Faserlänge der Fasern des Einfüll-Stoffes, insbesondere des ersten und/oder zweiten Einfüll-Stoffes kann mindestens 6 mm, vorzugsweise mindestens 11 mm betragen.

Eine Faserlänge der Fasern des Einfüll-Stoffes, insbesondere des ersten und/oder zweiten Einfüll-Stoffes kann höchstens 50 mm, vorzugsweise höchstens 25 mm betragen.

Es hat sich gezeigt, dass derartige Dimensionierungen besonders bei der Herstellung von Kfz-Bauteilen vorteilhaft sind.

Die Fasern können unmittelbar vor Einspritzung des jeweiligen Einfüll-Stoffes zerkleinert, insbesondere zugeschnitten, und/oder beigemengt werden. In diesem Zusammenhang ist unter "unmittelbar" insbesondere zu verstehen, dass die Zerkleinerung bzw. Beimengung in derselben Gesamt-Vorrichtung erfolgt und/oder in einem zeitlichen Abstand von nicht mehr als 30 Sekunden, vorzugsweise nicht mehr als 10 Sekunden vor der Einspritzung.

Im Spritzgussverfahren kann insbesondere ein Heißkanalsystem zum Einsatz kommen.

Die Herstellung (Mischung) und/oder Zuführung der jeweiligen Einfüll-Stoffe kann insbesondere wie in WO 2014/048667 A1 beschrieben, durchgeführt werden. Dort ist eine Zuführvorrichtung zur Zuführung von Fasern bei der Herstellung von faserverstärkten Kunststoffen beschrieben. Insbesondere kann also auch vorliegend eine Zuführvorrichtung zur Zuführung von Fasern bei der Herstellung des faserverstärkten Spritzgussteils, zum Einsatz kommen, umfassend eine Mehrwellen-Schneckenmaschine zur (seitlichen) Zuführung von Fasern in eine Aufbereitungsanlage zur Herstellung von faserverstärkten Kunststoffen mit einem Gehäuse, mehrere einander durchdringenden Gehäusebohrungen, mehrere in den Gehäusebohrungen konzentrisch angeordnete und um zugehörige Drehachsen drehantreibbare Schneckenwellen und eine Zuführöffnung zur Zuführung der Fasern in die Gehäusebohrungen, eine Saugeinrichtung zum Einsaugen der Fasern durch die Zuführöffnung in die Gehäusebohrungen mittels eines Luftstroms, und eine mittels der Saugeinrichtung und den Gehäusebohrungen angeordnete Filtereinrichtung zum Ausfiltern der Fasern aus dem Luftstrom, wobei die Filtereinrichtung mehrere Strömungskanäle ausbildet, die in einer Strömungsrichtung einen sich erweiternden Strömungsquerschnitt aufweisen.

Die Strömungskanäle können sich jeweils stufenförmig erweitern. Die Strömungskanäle können jeweils einen ersten Kanalabschnitt mit einer minimalen ersten Kanalbreite B₁ aufweisen, wobei gilt: 0,01 mm ≤ B₁ ≤ 0,4 mm und insbesondere 0,05 mm ≤ B₁ ≤ 0,2 mm. Die Strömungskanäle können jeweils einen ersten Kanalabschnitt und einen in der Strömungsrichtung nachgeordneten zweiten Kanalabschnitt mit einer minimalen zweiten Kanalbreite B₂ aufweisen, wobei gilt: 0,5 mm ≤ B₂ ≤ 3,0 mm und insbesondere 0,8 mm ≤ B₂ ≤ 2,0 mm. Vorzugsweise sind die Strömungskanäle jeweils spaltförmig ausgebildet sind und verlaufen quer zu einer Förderrichtung der Mehrwellen-Schneckenmaschine. Vorzugsweise weist die Filtereinrichtung mehrere aneinander anliegende Filterelemente auf, wobei benachbarte Filterelemente jeweils einen spaltförmigen Strömungskanal ausbilden. Vorzugsweise weisen die Filterelemente jeweils eine Grundplatte auf, an der mindestens ein quer zu der Strömungsrichtung verlaufender Filtersteg und mindestens zwei Abstandshalter angeordnet sind, wobei die mindestens zwei Abstandshalter zur Ausbildung eines Strömungskanals eine größere Breite als der mindestens eine Filtersteg aufweisen. Vorzugsweise ist die Filtereinrichtung aus einem Metall ausgebildet. Vorzugsweise ist in dem Gehäuse eine Saugöffnung ausgebildet, die in einer Förderrichtung der Mehrwellen-Schneckenmaschine versetzt zu der Zuführöffnung angeordnet ist. Vorzugsweise ist die Filtereinrichtung in dem Gehäuse, insbesondere in der Saugöffnung angeordnet und weist im Bereich der Gehäusebohrungen eine diesen entsprechende Querschnittsform auf. Vorzugsweise ist in einer zwischen der Filtereinrichtung und der Saugeinrichtung verlaufenden Saugleitung ein Drucksensor zur Überwachung des Luftdrucks angeordnet. Vorzugsweise ist in einer zwischen der Filtereinrichtung und der Saugeinrichtung verlaufenden Saugleitung ein Faserfilter angeordnet. Vorzugsweise ist ein Überwachungssensor zur Überwachung eines Kunststoffschmelze-Rückstaus vorgesehen. Vorzugsweise wird die Zuführöffnung in einer Förderrichtung der Mehrwellen-Schneckenmaschine durch ein Einlaufelement begrenzt, das eine Einlaufwand mit einem Winkel α relativ zu der Förderrichtung ausbildet, wobei gilt: 5° < α < 20°. Vorzugsweise ist der Mehrwellen-Schneckenmaschine eine Schneideinrichtung zum Schneiden von Endlosfasern in Fasern mit einstellbarer Faserlänge vorgeordnet.

Die oben genannte Aufgabe wird weiterhin gelöst durch eine Spritzgussvorrichtung zur Herstellung eines faserverstärkten Spritzgussteils, insbesondere Kfz-Spritzgussteils, insbesondere gemäß dem obigen Spritzgussverfahren, umfassend eine Spritzgussform (12) sowie eine Faserverteilungseinrichtung (16), die derart verstellbar ist, dass sie während eines ersten Zeitraums eines Einfüllvorgangs eines Einfüll-Stoffes in einer ersten Stellung ist und während eines zweiten Zeitraums des Einfüllvorgangs in einer abweichenden, zweiten, Stellung ist, insbesondere derart, dass eine Faserkomponente des Einfüll-Stoffes während des ersten Zeitraums und während des zweiten Zeitraums unterschiedlich innerhalb der Spritzgussform verteilt werden.

Die Faserverteilungseinrichtung umfasst vorzugsweise einen Faserverteilungsschieber, wobei der Faserverteilungsschieber vorzugsweise, zumindest abschnittsweise, innerhalb eines Formschiebers verläuft.

Die Faserverteilungseinrichtung definiert in mindestens einem von mehreren möglichen Zuständen vorzugsweise eine Außenkontur eines ausgeformten Formteils. In einem Zustand, in dem die Spritzgussform (maximal) gefüllt ist, definiert die Faserverteilungseinrichtung vorzugsweise einen Abschnitt einer Fläche (Außenfläche) des Formteils, ist also insbesondere soweit zurückbewegt (zurückgezogen), dass sie nicht mehr in die Spritzgussform hinein vorsteht.

In einer konkreten Ausführungsform umfasst die Spritzgussvorrichtung ein Heißkanalsystem.

Die oben genannte Aufgabe wird weiterhin gelöst durch die Verwendung eines Spritzgussverfahrens der obigen Art und/oder eine Spritzgussvorrichtung der obigen Art, zur Herstellung eines faserverstärkten Spritzgussteils, insbesondere Kfz-Teils.

Die oben genannte Aufgabe wird weiterhin gelöst durch ein faserverstärktes Spritzgussteil, insbesondere Kfz-Teil, hergestellt durch ein Spritzgussverfahren der obigen Art und/oder mit einer Spritzgussvorrichtung der obigen Art. Das umfasst vorzugsweise mindestens einen ersten Werkstoff und einen zweiten Werkstoff, die sich hinsichtlich ihrer jeweiligen Faserkomponente (insbesondere deren Konzentration und/oder Orientierung und/oder Fasergeometrie, wie insbesondere Faserlänge und/oder Faserdicke) unterscheiden. Das faserverstärktes Spritzgussteil, insbesondere Kfz-Teil, weist weiter vorzugsweise einen ersten, insbesondere inneren Bereich auf, der sich von einem zweiten, insbesondere äußeren Bereich, zumindest durch die jeweilige Faserkomponente unterscheidet (vorzugsweise hinsichtlich einer Faserlänge und/oder Faserdicke und/oder eines Faseranteils). Dabei ist es insbesondere so, dass sich die zum Einsatz kommende Faserverteilungseinrichtung in der Struktur des Spritzgussteils niederschlägt und insofern im fertigen Spritzgussteil nachweisbar ist.

Innerhalb des Spritzgussverfahrens kann insbesondere ein FDC (faser-direct-compound)-Verfahren zum Einsatz kommen, wobei eine modifizierte Plastiziereinheit vorgesehen sein kann, die eine Zerkleinerung und Beimengung von (Glas)-Fasern (oder anderen Fasern) in die Kunststoffschmelze unmittelbar vor deren Einpressen in die Spritzgussform ermöglicht.

Dieses Verfahren wird nun (gemäß einem unabhängigen Aspekt der Erfindung, der jedoch vorzugsweise mit den obigen und nachfolgen Aspekten kombiniert werden kann) verwendet, um Kfz-Kunststoffteile (insbesondere hochbelastete Kfz-Kunststoffteile) herzustellen.

Als (ggf. erster bzw. zweiter) Einfüll-Stoff (bzw. entsprechende Matrixkomponente, in der die Fasern aufgenommen sind) können (entsprechend modifizierte) Thermoplaste zum Einsatz kommen, die vorzugsweise für den Einsatz in der Fahrzeugindustrie entsprechend konfiguriert sind, wie insbesondere Polyamid und/oder Polypropylen und/oder Polyethylen und/oder Polyurethan, vorzugsweise Polyamid.

Vorzugsweise wird mittels Heißkanaltechnik eine sichere und zuverlässige Faserverarbeitung ermöglicht.

Insgesamt kann durch das erfindungsgemäße Spritzgussverfahren eine verbesserte (optimale) Anpassung (des gefertigten Bauteils) an eine jeweilige Bauteilbelastung ermöglicht werden (insbesondere durch die Anpassung der Faserstruktur, vorzugsweise Faserlänge und/oder Faserdicke, und/oder eines Faseranteils). Neben einer Verbesserung der mechanischen Festigkeitseigenschaften kann gleichzeitig eine (erhebliche) Reduktion eines Bauteilgewichts erreicht werden.

Gerade im Vergleich zu metallischen Werkstoffen und hochbelastbaren Kunststoffen kann eine deutliche Gewichtsreduktion erreicht werden. Auch ohne metallische Stützkomponenten können verbesserte mechanische Eigenschaften erreicht werden. Auch im Hinblick auf Oberflächeneigenschaften können Verbesserungen erzielt werden.

Eine Nadelführung und Nadelgeometrie in der vorzugsweise eingesetzten Heißkanaltechnik kann entsprechend konfiguriert werden.

Die Faserverteilungseinrichtung kann als (zusätzliches) Formelement zur Ausformung des Spritzgussteils beitragen. Schmelzfluss sowie Fasergeometrie können dann durch diese (zusätzlichen) Formelemente innerhalb des Spritzgusswerkzeugs beeinflusst werden, wobei die Formelemente mechanisch beweglich sind und insbesondere in Abhängigkeit vom Füllgrad des Werkzeugs aus dem Schmelzefluss entfernt (herausbewegt) werden können.

Eine Steuerung der Formelemente kann zeitabhängig und/oder druckabhängig erfolgen, insbesondere über eine Erweiterung der Maschinensteuerung und deren Implementierung in den Verfahrensablauf.

Weitere Ausführungsformen ergeben sich aus den Unteransprüchen.

Nachfolgend wird die Erfindung anhand eines Ausführungsbeispieles beschrieben, das anhand der beigefügten Figur näher erläutert wird. Hierbei zeigt:

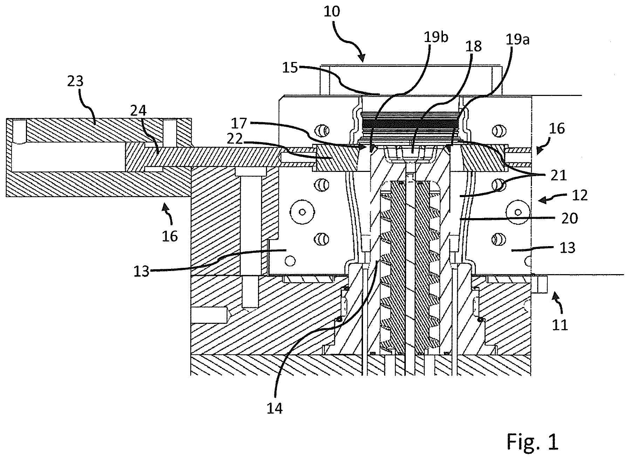

Fig. 1 eine schematische (teilweise geschnittene) Ansicht einer erfindungsgemäßen Spritzgussvorrichtung.

In der nachfolgenden Beschreibung werden für gleiche und gleichwirkende Teile dieselben Bezugsziffern verwendet.

In Fig. 1 wird auf einer Düsenseite 10 ein Einfüll-Stoff eingespritzt. Die Düsenseite 10 befindet sich gegenüber einer Auswerferseite 11. Eine Spritzgussform 12 umfasst Formschieber 13, eine Innenform 14 (optional mit einer Kühlspirale), wobei die Innenform 14 gleichzeitig auch ein auswerferseitiges Ende eines zu füllenden Volumens 20 definiert sowie eine obere Abgrenzung 15, die das Volumen 20 bzw. das darin befindliche Spritzgussteil düsenseitig (in Fig. 1 nach oben) abgrenzt.

Seitlich wird das Volumen 20 überwiegend durch die Formschieber 13 und zu einem geringeren Teil auch durch die nachfolgend näher zu erläuternde Faserverteilungseinrichtung 16 definiert und zwar in einem Bereich 17 der Spritzgussform 12, in der sich auch eine Anguss-Position 18 befindet.

Konkret wird der (flüssige bzw. plastisch verformbare) Einfüll-Stoff bei den Bezugszeichen 19a, 19b in das auszufüllendes Volumen 20 der Spritzgussform 12 eingespritzt, so dass sich in dem Volumen 20 ein Spritzgussteil 21 ausbilden kann. Das Spritzgussteil 21 ist teilweise geschnitten dargestellt (in Fig. 1 auf Höhe der Faserverteilungseinrichtung und darunter) bzw. in einer Draufsicht dargestellt (in Fig. 1 oberhalb der Faserverteilungseinrichtung 16).

Die Faserverteilungseinrichtung 16 umfasst einen Faserverteilungsschieber 22, der weiter in das innere Volumen 20 der Spritzgussform 12 hineinbewegt werden kann oder daraus herausbewegt werden kann. Dazu ist ausführungsgemäß (Alternativen sind denkbar) ein hydraulischer Antrieb 23 mit einem Hydraulikzylinder 24 vorgesehen. In Fig. 1 sind konkret zwei

Faserverteilungseinrichtungen 16 (die eine nur abschnittsweise) zu erkennen. Es können jedoch auch mehr als zwei, oder nur eine, Faserverteilungseinrichtungen 16 vorgesehen sein.

Der Faserverteilungsschieber 22 befindet sich in (unmittelbarer) Nachbarschaft bzw. auf gleicher Höhe wie die Anguss-Position 18. Dadurch kann der Faserverteilungsschieber 22 effektiv die Verteilung des an der Anguss-Position 18 einströmenden Einfüll-Stoffes beeinflussen. Befindet sich der Faserverteilungsschieber 22 näher an der Anguss-Position 18, wird der Einfüll-Stoff eher nach innen gelenkt. Befindet sich der Faserverteilungsschieber weiter außen (zurückgezogen), wird der einströmende Einfüll-Stoff eher nach außen gelenkt und weniger nach innen gelenkt.

An dieser Stelle sei darauf hingewiesen, dass alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichenliste

- 10: Düsenseite
- 11: Auswerferseite
- 12: Spritzgussform
- 13: Schieber
- 14: Innenform (Innenwerkzeug)
- 15: Abgrenzung
- 16: Faserverteilungseinrichtung
- 17: Bereich
- 18: Anguss-Position
- 19a, 19b: Position
- 20: Volumen
- 21: Spritzgussteil
- 22: Faserverteilungsschieber
- 23: Hydraulikantrieb
- 24: Hydraulik

## Patentansprüche

1. Spritzgussverfahren zur Herstellung eines faserverstärkten Spritzgussteils, insbesondere Kfz-Spritzgussteils, wobei ein Einfüll-Stoff mit einer Faserkomponente in eine Spritzgussform (12) eingefüllt wird, , wobei eine Faserverteilungseinrichtung (16) während eines ersten Zeitraums des Einfüllvorgangs in einer ersten Stellung ist und während eines zweiten Zeitraums in einer abweichenden, zweiten, Stellung ist, derart, dass die Faserkomponente des Einfüll-Stoffes während des ersten Zeitraums und während des zweiten Zeitraums unterschiedlich innerhalb der Spritzgussform (12) verteilt werden.

2. Spritzgussverfahren nach Anspruch 1,
**dadurch gekennzeichnet, dass**
die Faserverteilungseinrichtung (16) während des ersten Zeitraums weiter in die Spritzgussform (12) eintaucht als während des zweiten Zeitraums, oder umgekehrt, und/oder während des ersten Zeitraums anders orientiert ist als während des zweiten Zeitraums.

3. Spritzgussverfahren nach Anspruch 1 oder 2,
**dadurch gekennzeichnet, dass**
die Faserverteilungseinrichtung (16) einen Faserverteilungsschieber (22) umfasst, wobei der Faserverteilungsschieber (22) vorzugsweise, zumindest abschnittsweise, innerhalb eines Formschiebers (13) verläuft.

4. Spritzgussverfahren nach einem der vorhergehenden Ansprüche,
**dadurch gekennzeichnet, dass**
die Faserverteilungseinrichtung (16) in mindestens einem von mehreren möglichen Zuständen eine Außenkontur eines ausgeformten Formteils (21) definiert.

5. Spritzgussverfahren nach einem der vorhergehenden Ansprüche,
**dadurch gekennzeichnet, dass**
mehrere Einfüll-Stoffe, insbesondere zumindest ein erster und ein zweiter Einfüll-Stoff zum Einsatz kommen, wobei sich die Einfüll-Stoffe vorzugsweise hinsichtlich einer Faserstruktur, insbesondere Faserlänge, und/oder hinsichtlich eines Faseranteils unterschieden.

6. Spritzgussverfahren nach einem der vorhergehenden Ansprüche,
**dadurch gekennzeichnet, dass**
eine Steuerung der Faserverteilungseinrichtung zeit- und/oder druckabhängig erfolgt.

7. Spritzgussverfahren nach einem der vorhergehenden Ansprüche,
**dadurch gekennzeichnet, dass**
eine Steuerung einer Einfüll-Stoffzusammensetzung zeit- und/oder druckabhängig erfolgt.

8. Spritzgussverfahren nach einem der vorhergehenden Ansprüche,
**dadurch gekennzeichnet, dass**
der Einfüll-Stoff, insbesondere der erste und/oder zweite Einfüll-Stoff, Glas- und/oder Kohlenstofffasern enthält.

9. Spritzgussverfahren nach einem der vorhergehenden Ansprüche,
**dadurch gekennzeichnet, dass**
ein Faseranteil des Einfüll-Stoffes, insbesondere des ersten und/oder zweiten Einfüll-Stoffes mindestens 10 Gew.-%, vorzugsweise mindestens 15 Gew.-% beträgt und/oder
ein Faseranteil des Einfüll-Stoffes, insbesondere des ersten und/oder zweiten Einfüll-Stoffes höchstens 80 Gew.-%, vorzugsweise höchstens 65 Gew.-% beträgt und/oder
eine Faserlänge der Fasern des Einfüll-Stoffes, insbesondere des ersten und/oder zweiten Einfüll-Stoffes mindestens 6 mm, vorzugsweise mindestens 11 mm beträgt und/oder
eine Faserlänge der Fasern des Einfüll-Stoffes, insbesondere des ersten und/oder zweiten Einfüll-Stoffes höchstens 50 mm, vorzugsweise höchstens 25 mm beträgt.

10. Spritzgussverfahren nach einem der vorhergehenden Ansprüche,
**dadurch gekennzeichnet, dass**
die Fasern unmittelbar vor Einspritzung des jeweiligen Einfüll-Stoffes zerkleinert, insbesondere zugeschnitten, und/oder beigemengt werden.

11. Spritzgussverfahren nach einem der vorhergehenden Ansprüche,
**dadurch gekennzeichnet, dass**
ein Heißkanalsystem zum Einsatz kommt.

12. Spritzgussvorrichtung zur Herstellung eines faserverstärkten Spritzgussteils, insbesondere Kfz-Spritzgussteils, insbesondere gemäß dem Spritzgussverfahren nach einem der vorhergehenden Ansprüche, umfassend eine Spritzgussform (12) sowie eine Faserverteilungseinrichtung (16), die derart verstellbar ist, dass sie während eines ersten Zeitraums eines Einfüllvorgangs eines Einfüll-Stoffes in einer ersten Stellung ist und während eines zweiten Zeitraums des Einfüllvorgangs in einer abweichenden, zweiten, Stellung ist, derart, dass eine Faserkomponente des Einfüll-Stoffes während des ersten Zeitraums und während des zweiten Zeitraums unterschiedlich innerhalb der Spritzgussform verteilt werden.

13. Spritzgussvorrichtung nach Anspruch 12,
**dadurch gekennzeichnet, dass**
die Faserverteilungseinrichtung (16) einen Faserverteilungsschieber (22) umfasst, wobei der Faserverteilungsschieber (22) vorzugsweise, zumindest abschnittsweise, innerhalb eines Formschiebers (12) verläuft.

14. Spritzgussvorrichtung nach Anspruch 12 oder 13,
**dadurch gekennzeichnet, dass**
die Faserverteilungseinrichtung (16) in mindestens einem von mehreren möglichen Zuständen eine Außenkontur eines ausgeformten Spritzgussteils definiert.

15. Spritzgussvorrichtung nach einem der Ansprüche 12 bis 14,
**gekennzeichnet durch**
ein Heißkanalsystem.

16. Verwendung eines Spritzgussverfahrens gemäß einem der Ansprüche 1 bis 11 und/oder einer Spritzgussvorrichtung nach einem der Ansprüche 12 bis 15, zur Herstellung eines faserverstärkten Spritzgussteils, insbesondere Kfz-Teils.

17. Faserverstärktes Spritzgussteil, insbesondere Kfz-Teil, hergestellt durch ein Spritzgussverfahren nach einem der Ansprüche 1 bis 11 und/oder mit einer Spritzgussvorrichtung nach einem der Ansprüche 12 bis 15.
